# EUROPEAN PATENT APPLICATION

(11) **EP 2 922 350 A1**
(43) Date of publication of application: **23.09.2015**
(21) Application number: 14305372.6
(22) Date of filing: 17.03.2014
(51) Int. Cl.: H04W 48/20, H04W 36/22, H04W 28/08, H04W 36/08, H04W 84/12

(54) **Collaboration between wireless access points**

(71) Applicant: Thomson Licensing, 92130 Issy-les-Moulineaux (FR)
(72) Inventor: Pefkianakis, Ioannis, 92443 Issy-les-Moulineaux (FR)
(74) Representative: Browaeys, Jean-Philippe

(57) **Abstract**

This method of collaboration between at least a first access point (4) and a second access point (6) of a wireless network (2) comprises:
- indication by both access points (4, 6) that they support collaboration;
- sending a request of collaboration from the first access point (4) to the second access point (6), said request indicating at least one client (10) of the first access point (4) that the second access point (6) is requested to serve;
- acceptance or refusal of the collaboration by the second access point (6).

## Description

### FIELD OF THE INVENTION

The present invention generally relates to the field of wireless networks.

More particularly, the invention deals with the design of collaborative wireless networks formed by a plurality of access points.

Thus, the invention concerns a method of collaboration between wireless access points. It also concerns a corresponding access point and a collaborative network. It further concerns a computer program implementing the collaboration method of the invention.

### BACKGROUND OF THE INVENTION

The approaches described in this section could be pursued, but are not necessarily approaches that have been previously conceived or pursued. Therefore, unless otherwise indicated herein, the approaches described in this section are not prior art to the claims in this application and are not admitted to be prior art by inclusion in this section.

Wireless networks, such as WLANs (Wireless Local Area Networks) have become increasingly popular due to their ease of deployment and their low cost. The most popular of these networks is WiFi (Wireless Fidelity) which refers to a standardized IEEE 802.11 wireless network.

It can be easily observed, nowadays, that the deployment of home WiFi-capable access points, also called home gateways, can be very dense. Each home gateway has multiple neighboring home gateways with which it can exchange data through WiFi.

It also appears that the capacity of a WiFi network can be highly underutilized.

Furthermore, inside a home, multiple spots with poor wireless coverage can be found.

The above observations apply to any wireless network, more particularly to IEEE 802.11 wireless networks. Thus, there's a need for designing collaborative wireless networks, which allow a better wireless coverage and a more efficient use of the available bandwidth.

The article of N. Sastry, J. Crowcroft, and K. Sollins : "Architecting Citywide Ubiquitous Wi-Fi Access", ACM HotNets'07, addresses the issue of how to induce hosts owning access points to explicitly and safely share their Wi-Fi networks with legitimate guests, while at the same time ensuring that guests are protected from malicious hosts. The focus of this work is urban environment.

However, this article does not explain how the access points discover each other in order to share their bandwidth.

### SUMMARY OF THE INVENTION

The present invention proposes a solution for improving the situation.

Accordingly, the present invention provides a method of collaboration between at least a first access point and a second access point of a wireless network, comprising:
- indication by both access points that they support collaboration;
- sending a request of collaboration from the first access point to the second access point, said request indicating at least one client of the first access point that the second access point is requested to serve;
- acceptance or refusal of the collaboration by the second access point.

Thus, in embodiments of the present invention, a wireless client can be served by any of the collaborating access points. Thus, a better coverage of the wireless network and improved performances for the wireless clients are ensured by embodiments of the present invention.

Advantageously, the request includes a Quality of Service, QoS, requirement for the client.

Thus, the client is not disadvantaged, in terms of QoS, when it is served by the second access point.

Preferably, if the second access point cannot ensure the required QoS for the client, the collaboration is refused by said second access point.

In this case, the first access point may send a new request of collaboration to said second access point, said new request comprising a new QoS requirement.

Advantageously, the request of collaboration is processed according to a three-way handshake comprising:
- sending the request from the first access point to the second access point;
- sending an acknowledgement of the request from the second access point to the first access point;
- sending a response to said acknowledgment from the first access point to the second access point.

This three-way handshake improves the security of the collaboration between the access points.

Advantageously, the wireless network is a WiFi network.

According to an embodiment, the three-way handshake is implemented by using IEEE 802.11 standard frames.

Advantageously, the access points indicate that they support collaboration by exchanging beacon frames.

Preferably, the method comprises selecting the second access point by the first access point.

Advantageously, the first access point selects the second access point if a Received Signal Strength Indication, RSSI, of the second access point measured at the first access point, is greater than a threshold.

For example, this RSSI threshold corresponds to a physical rate threshold of a given application. This physical rate threshold may be chosen, for instance, greater than the speed requirements, expressed in Mbps, of current popular applications.

According to an embodiment, each access point serves its own clients in priority.

Advantageously, the method comprises switching by the first access point its collaboration with the second access point to a collaboration with a third access point.

For example, this switching may occur if, at the first access point, the RSSI of the third access point is higher than the RSSI of the second access point.

According to an embodiment, the method comprises authenticating said client by the second access point.

The invention further provides a first access point of a wireless network, comprising:
- an advertising module configured to indicate that said first access point supports collaboration;
- a sending module able to send a request of collaboration to a second access point of the wireless network, said request indicating at least one client of the first access point that the second access point is requested to serve.

The invention also provides a collaborative wireless network comprising at least two access points according to the invention.

The method according to the invention may be implemented in software on a programmable apparatus. It may be implemented solely in hardware or in software, or in a combination thereof.

Since the present invention can be implemented in software, the present invention can be embodied as computer readable code for provision to a programmable apparatus on any suitable carrier medium. A carrier medium may comprise a storage medium such as a floppy disk, a CD-ROM, a hard disk drive, a magnetic tape device or a solid state memory device and the like.

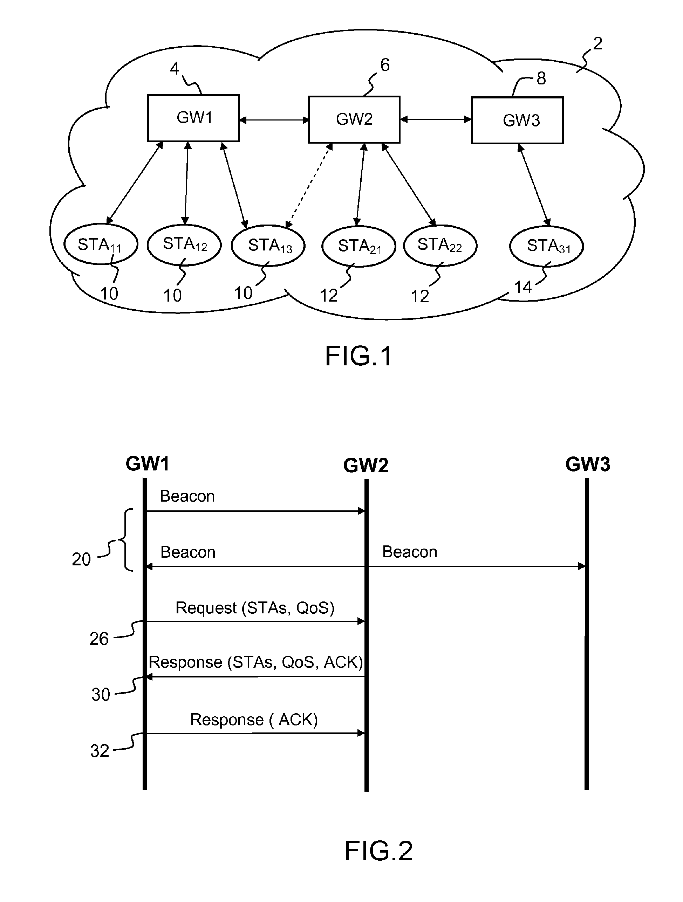

The invention thus provides a computer-readable program comprising computer-executable instructions to enable a computer to perform the method of the invention. The diagram of figure 2 illustrates an example of the general algorithm for such computer program.

### BRIEF DESCRIPTION OF THE DRAWINGS

The present invention is illustrated by way of examples, and not by way of limitation, in the figures of the accompanying drawings, in which like reference numerals refer to similar elements and in which:
- Figure 1 is a schematic view of an example of a wireless network in which embodiments of the collaboration method of the present invention may be advantageously implemented ;
- Figure 2 is a flowchart showing the steps of the collaboration method according to an embodiment of the present invention;
- Figure 3 is a schematic view of an IEEE 802.11 standard frame used for establishing a collaboration between access points, according to an embodiment of the present invention; and
- Figure 4 is a schematic view of an access point according to an embodiment of the present invention.

### DETAILED DESCRIPTION OF PREFERRED EMBODIMENTS

Referring to Figure 1, there is shown therein a schematic view of a wireless network 2 in which embodiments of the invention may be implemented.

The wireless network 2 is for instance a Wireless Local Area Network (WLAN), such as an IEEE 802.11 WLAN, more commonly known as a Wi-Fi network.

The wireless network 2 comprises a plurality of access points, such as for example, home gateways, serving a plurality of clients comprising terminals like personal computers, smart phones, tablets, connected TVs, etc.

In Figure 1, three access points 4, 6, 8 and their clients are represented. The number of access points and clients represented here is only an example. Any number of access points and clients may be considered and the present invention is not limited to a particular configuration of the access points and the clients.

A first access point 4, called GW1, serves three clients 10 which are STA₁₁, STA₁₂, STA₁₃.

A second access point 6, called GW2, serves two clients 12 which are STA₂₁, STA₂₂.

A third access point 8, called GW3, serves one client 14 which is STA₃₁.

The first and third access points 4, 8 are neighboring access points of the second access point 6. More particularly, according to the represented embodiment, the first and third access points 4, 8 are within the radio range of the second access point 6.

According to an embodiment of the present invention, at least one client 10 of the first access point 4 may also be served by the second access point 6 following a request of collaboration sent from the first access point 4 to the second access point 6. This request may be triggered, for instance, when the first access point 4 does not have enough bandwidth to serve a newly added client STA₁₃.

The flowchart of Figure 2 illustrates the steps of the method of collaboration between access points according to an embodiment.

At a first step 20, both the first and second access points 4, 6 indicate that they support collaboration with neighboring access points by broadcasting collaboration beacons. For instance, IEEE 802.11 standard beacons frames may be used. These beacon frames have some "Reserved" bits which can be advantageously used for indicating the collaboration. Other IEEE 802.11 management frames can also be used for this indication.

According to an embodiment, this indication step is performed continuously as long as the access points still want to collaborate.

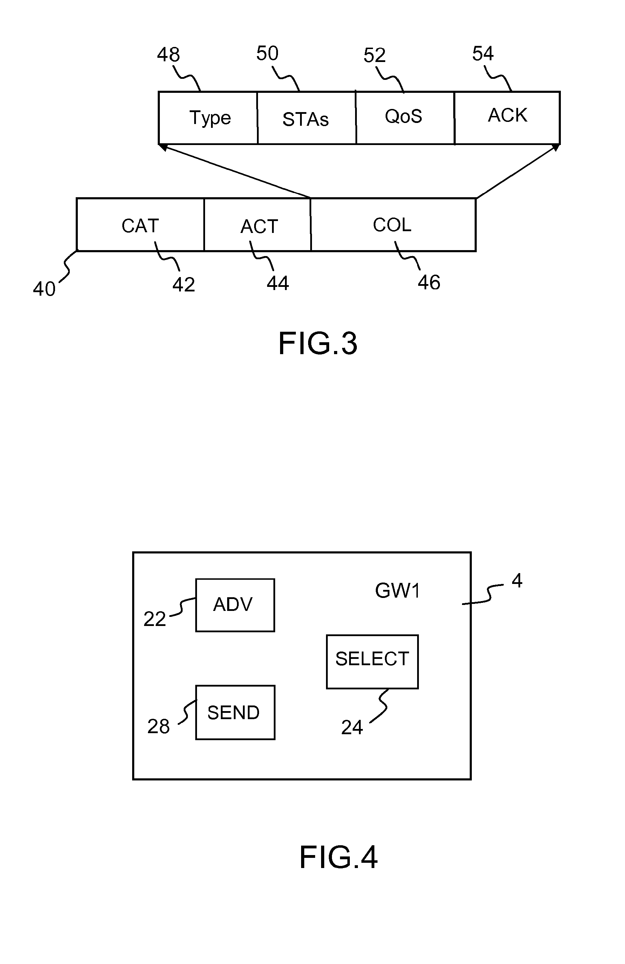

An advertisement module 22, preferably provided in each access point, and represented on Figure 4 for the first access point 4, is configured to perform this indication.

Then, the first access point 4 selects, through a selection module 24, represented on Figure 4, the access points that it wants to collaborate with.

According to an embodiment, the selection module 24 uses the received beacons from the neighboring access points to measure the RSSI of these neighboring access points. If the RSSI measured from the second access point 6 is greater than a threshold RSSI_{T}, i.e. RSSI > RSSI_{T}, then the second access point 6 can be a candidate access point for collaboration.

According to an example, other selection criteria may be used, so that the first access point 4 may choose to collaborate with only a subset of the access points satisfying to the condition RSSI > RSSI_{T}.

Supposing that the second access point 6 has been selected by the first access point 4 for the collaboration, then, according to an embodiment, the first access point 4, initiates a three-way handshake with the second access point 6.

During a first step 26 of this three-way handshake, a sending module 28 (represented on Figure 4) of the first access point 4 sends a request of collaboration to the second access point 6.

According to an embodiment, said request comprises a field "STAs" including the MAC addresses of the clients of the first access point 4 that the second access point 6 is requested to serve. In the example of situation described above, this field comprises the MAC address of the client STA₁₃.

Preferably, said request also comprises a field "QoS" which includes the requested quality of service for the clients indicated in the field "STAs".

According to an example, the QoS is defined in a manner similar to IEEE 802.11e WME (Wireless Multimedia Extensions) extensions.

Alternatively, the request does not contain a "QoS" field. In this case, the second access point 6 advantageously implements a scheduling policy. For example, the second access point 6 may serve first and with the highest priority its own clients. When, after serving its own clients, the second access point 6 still has some available bandwidth, then it can serve the clients of the requesting collaborative access points using its default scheduling policy. This policy of giving the highest priority to the access point's own clients prevents malicious access points from impacting neighboring access points performance.

At a second step 30 of the three-way handshake, the second access point 6 sends an acknowledgement of the request. This acknowledgement ACK indicates if the second access point 6 accepts or refuses the collaboration.

Advantageously, if the second access point 6 refuses the collaboration with the first access point 4, it communicates the reason of this refusal in the acknowledgement. This reason may be, for instance, that said second access point 6 cannot provide the requested QoS.

At a third step 32 of the three-way handshake, the first access point 4 sends a response to said acknowledgment in order to verify the collaboration.

In the case of a refusal of the collaboration by the second access point 6 for a QoS reason, the first access point 4 may send a new request for collaboration to the second access point 6 with a different QoS.

According to an embodiment, a similar three-way handshake is used by the first access point 4 to terminate the collaboration with the second access point 6. This termination may be triggered when the first access point 4 stops receiving collaboration beacons from the second access point 6.

Furthermore, preferably, the first access point 4 uses a handoff technique to switch between collaborating access points. For instance, the first access point 4 may switch from the second access point 6 to another access point having a higher RSSI.

Advantageously, when the client 10 is served by the second access point 6 and not by its own access point, i.e. the first access point 4, it does not need any credentials since it can be included in an access list of second access point 6. For example, when the first and second access points agree to collaborate, they can allow their clients to connect with each of them by adding said client to their access lists. Then, both access points advantageously apply techniques as MAC filtering to control the access. As a result, credentials are not required for the clients from the collaborative access points.

Alternatively, other authentication methods may be advantageously implemented by the access points for the clients of other access points. For example, authentication keys like in IEEE 802.11 WEP (Wired Equivalent Privacy) or IEEE 802.11 WPA (Wi-Fi Protected Access) can be encrypted and exchanged between the collaborating access points.

Advantageously, the three-way handshake between the access points 4, 6 uses the Action Management Frame defined in the IEEE 802.11n standard. This frame 40 is represented in Figure 3.

The frame 40 comprises a Category field 42 and an Action field 44 which are defined by the IEEE 802.11n standard. The standard allows to define a new Category. Thus, for the implementation of the present invention, the Category can be "Collaboration Management Frame" defined by a sequence of bits.

According to the represented embodiment, the frame 40 also includes a last field 46 called Collaboration. This field contains all the information required for the collaboration as described above. For instance the Collaboration field comprises 4 subfields:
- Type 48 which can be "Request" or "Response";
- STAs 50 which indicates the clients;
- QoS 52 which indicates the requested Quality of Service; and
- ACK which is the acknowledgement.

While there has been illustrated and described what are presently considered to be the preferred embodiments of the present invention, it will be understood by those skilled in the art that various other modifications may be made, and equivalents may be substituted, without departing from the true scope of the present invention. Additionally, many modifications may be made to adapt a particular situation to the teachings of the present invention without departing from the central inventive concept described herein. Furthermore, an embodiment of the present invention may not include all of the features described above. Therefore, it is intended that the present invention is not limited to the particular embodiments disclosed, but that the invention includes all embodiments falling within the scope of the appended claims.

Expressions such as "comprise", "include", "incorporate", "contain", "is" and "have" are to be construed in a non-exclusive manner when interpreting the description and its associated claims, namely construed to allow for other items or components which are not explicitly defined also to be present. Reference to the singular is also to be construed to be a reference to the plural and vice versa.

A person skilled in the art will readily appreciate that various parameters disclosed in the description may be modified and that various embodiments disclosed and/or claimed may be combined without departing from the scope of the invention.

For instance, the wireless network may also be a cellular network, for instance a 4G LTE (Long Term Evolution) network.

## Claims

1. Method of collaboration between at least a first access point (4) and a second access point (6) of a wireless network (2), comprising:
- indication (20) by both access points (4, 6) that they support collaboration;
- sending (26) a request of collaboration from the first access point (4) to the second access point (6), said request indicating at least one client (10) of the first access point (4) that the second access point (6) is requested to serve;
- acceptance or refusal (30) of the collaboration by the second access point (6).

2. Method of claim 1, wherein the request includes a Quality of Service, QoS, requirement for the client (10).

3. Method of claim 2, wherein if the second access point (6) cannot ensure the required QoS for the client (10), the collaboration is refused by said second access point (6).

4. Method of any one of claims 1 to 3, wherein the request of collaboration is processed according to a three-way handshake comprising:
- sending (26) the request from the first access point (4) to the second access point (6);
- sending (30) an acknowledgement of the request from the second access point (6) to the first access point (4);
- sending (32) a response to said acknowledgment from the first access point (4) to the second access point (6).

5. Method of any one of claims 1 to 4, wherein the wireless network (2) is a WiFi network.

6. Method of claims 4 and 5, wherein the three-way handshake is implemented by using IEEE 802.11 standard frames (40).

7. Method of any one of claims 1 to 6, wherein the access points (4, 6) indicate that they support collaboration by exchanging beacon frames.

8. Method of any one of claims 1 to 7, further comprising selecting the second access point (6) by the first access point (4).

9. Method of claim 8, wherein the first access point (4) selects the second access point (6) if a Received Signal Strength Indication, RSSI, of the second access point (6) measured at the first access point (4), is greater than a threshold.

10. Method of any one of claims 1 to 9, wherein each access point (4, 6) serves its own clients in priority.

11. Method of any one of claims 1 to 10, further comprising switching by the first access point (4) its collaboration with the second access point (6) to a collaboration with a third access point.

12. Method of any one of claims 1 to 11, further comprising authenticating said client (10) by the second access point (6).

13. First access point (4) of a wireless network (2), comprising:
- an advertising module (22) configured to indicate that said first access point (4) supports collaboration;
- a sending module (28) able to send a request of collaboration to a second access point (6) of the wireless network (2), said request indicating at least one client (10) of the first access point (4) that the second access point (6) is requested to serve.

14. Collaborative wireless network (2) comprising at least two access points (4, 6) according to claim 13.

15. A computer-readable program comprising computer-executable instructions to enable a computer to perform the method of any one of claims 1 to 12.
